# EUROPEAN PATENT APPLICATION

(11) **EP 4 704 244 A1**
(43) Date of publication of application: **04.03.2026**
(21) Application number: 25197606.4
(22) Date of filing: 22.08.2025
(51) Int. Cl.: H01M 50/466, H01M 50/609, H01M 10/04

(54) **ELECTRODE ASSEMBLY AND SECONDARY BATTERY**

(30) Priority: 28.08.2024 KR 20240116110
(71) Applicant: SAMSUNG SDI CO., LTD., Yongin-si, Gyeonggi-do 17084 (KR)
(72) Inventor: GUEN, Min Hyung, Suwon-si, Gyeonggi-do 16678 (KR)
(74) Representative: Gulde & Partner

(57) **Abstract**

The present disclosure relates to an electrode assembly, and a technical problem to be addressed includes providing an electrode assembly with improved impregnation. The present disclosure describes an electrode assembly that includes a first electrode and a second electrode, and a separator between the first electrode and the second electrode. The electrodes and the separator are stacked in one direction, and the separator includes one or more holes formed in the stacking direction of the separator.

## Description

### BACKGROUND

### 1. Field of the Disclosure

The present disclosure relates to an electrode assembly, and to a secondary battery including the electrode assembly.

### 2. Discussion of Related Art

Unlike primary batteries that typically cannot be charged, secondary batteries can be charged and discharged. Low-capacity secondary batteries are typically used in small, portable electronic devices such as, e.g., smartphones, feature phones, laptop computers, digital cameras, camcorders, and the like, whereas high-capacity batteries are widely used as power sources for driving motors in hybrid vehicles, electric vehicles, and the like, and as batteries for power storage. Secondary batteries typically include an electrode including a positive electrode and/or a negative electrode, an electrode assembly including the electrode, a case accommodating the electrode assembly, and an electrode terminal connected to the electrode assembly.

Short circuits between electrodes readily occur during the charging and discharging process in secondary batteries. In particular, when a pressure increases, or electrode deterioration occurs, due to over-charging or over-discharging, a short circuit may occur between the negative electrode and the positive electrode. To reduce or prevent the short circuit, secondary batteries further include a separator located between the negative electrode and the positive electrode.

### SUMMARY

The invention is defined by the appended claims. The description that follows is subjected to this limitation. Any disclosure lying outside the scope of said claims is only intended for illustrative as well as comparative purposes.

An electrode assembly according to the present invention includes a first electrode and a second electrode, and a separator between the first electrode and the second electrode. The electrodes and the separator are stacked in one direction, and the separator includes one or more holes formed in the stacking direction of the separator.

A secondary battery according to the present invention includes a case and an electrode assembly included in the case. The electrode assembly includes a first electrode and a second electrode and a separator between the first electrode and the second electrode, the electrodes and the separator are stacked in one direction, and the separator includes one or more holes formed in the stacking direction of the separator.

According to examples of the present disclosure, a path through which the electrolyte penetrates into the electrode assembly can be added and/or expanded.

According to examples of the present disclosure, the impregnation of the electrolyte can be improved.

According to examples of the present disclosure, the impregnation time of the electrolyte can be divided and/or optimized.

According to examples of the present disclosure, the degree of electrolyte impregnation can be set according to the thickness and/or the density of the electrode assembly.

The effects that can be achieved through the present disclosure are not limited to the above-described effects, and other technical effects not discussed can be understood by those skilled in the art from the following description of the disclosure.

### BRIEF DESCRIPTION OF THE DRAWINGS

The drawings of the current disclosure illustrate example embodiments of the present disclosure, and along with the following detailed description of the disclosure, help understand the technical idea of the present disclosure. Therefore, the present disclosure should not be construed as limited to the matters described in the drawings, in which:
FIG. 1 is a schematic view of a secondary battery according to an example embodiment of the present disclosure;
FIG. 2 is a view of an electrode assembly according to an example embodiment of the present disclosure;
FIG. 3 is a view of a separator according to an example embodiment of the present disclosure;
FIG. 4 is a view of a separator according to an example embodiment of the present disclosure;
FIG. 5 is a view of an electrode assembly according to an example embodiment of the present disclosure;
FIG. 6 is a view of an electrode assembly according to an example embodiment of the present disclosure; and
FIG. 7 is a view of an electrode assembly according to an example embodiment of the present disclosure.

### DETAILED DESCRIPTION

Hereinafter, example embodiments of the present disclosure are described in detail. However, the example embodiments are presented as examples, the present disclosure is not limited thereto, and the present disclosure is only defined by the scope of the claims described below.

Unless otherwise specified herein, when a part such as a layer, a film, an area, a plate, and the like, is said to be "on" another part, the part includes not only the case where it is "directly on" another part, but also the case where a different part is present therebetween.

Unless otherwise specified in this specification, the singular may also include the plural. In addition, unless otherwise specified, "A or B" may mean "including A," "including B," or "including A and B."

In this specification, "a combination thereof" may mean a mixture, a laminate, a composite, a copolymer, an alloy, a blend, and a reaction product of the constituents.

Unless otherwise defined herein, the particle size may be an average particle size. In addition, the particle size refers to the average particle size (D50), which is the diameter of particles with a cumulative volume of 50 vol% in the particle size distribution. The average particle size (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle diameter (D50) value may be obtained by performing data analysis, counting the number of particles in each particle size range, and then calculating the D50 value therefrom. Alternatively, the average particle diameter may be measured using a laser diffraction method. When measuring the average particle diameter by the laser diffraction method, for example, the average particle size (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of 60 W.

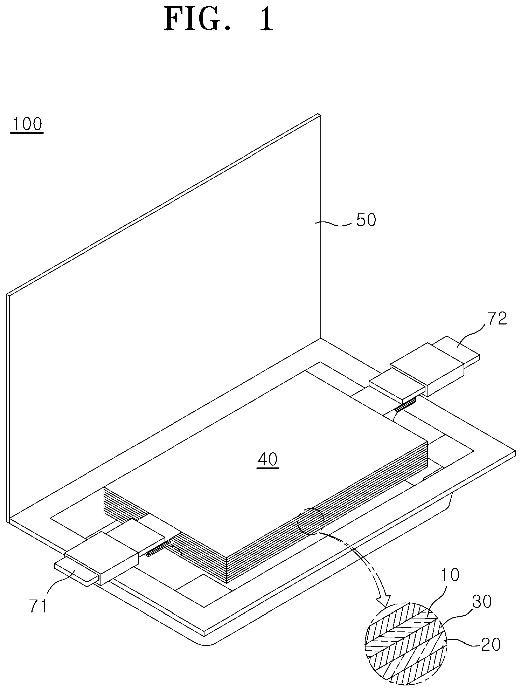

FIG. 1 is a schematic view of a secondary battery according to an example embodiment of the present disclosure.

### Secondary battery 100

A secondary battery 100 may be classified into, e.g., a cylindrical shape, a prismatic shape, a pouch shape, a coin shape, and the like, depending on the shape thereof. FIG. 1 is a schematic view of a secondary battery according to an example embodiment of the present disclosure, which may be or include, for example, a pouch-shaped battery.

The secondary battery 100 may include an electrode assembly 40 with a separator 30 interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). The secondary battery 100 may include electrode tabs such as a positive electrode tab 71 and a negative electrode tab 72, which form an electrical passage for guiding the current generated in the electrode assembly 40 to the outside of the battery 100.

### Positive electrode active material

A compound capable of reversible intercalation and deintercalation of lithium (lithiated intercalation compound) may be included as a positive electrode active material. For example, one or more types of composite oxides of lithium and a metal, which is or includes at least one of cobalt, manganese, nickel and a combination thereof, may be included.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following chemical formulas may be included: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8, and 0.001≤b≤0.1); LiₐCoG_{b}O₂ (0.90≤a≤1.8, and 0.001≤b≤0.1); LiₐMn_{1-b}G_{b}O₂ (0.90≤a≤1.8, and 0.001≤b≤0.1); LiₐMn₂G_{b}O₄ (0.90≤a≤1.8, and 0.001≤b≤0.1); LiₐMn_{1-g}G_{g}PO₄ (0.90≤a≤1.8, and 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

As an example, the positive electrode active material may be or include a high nickel-based positive electrode active material in which the nickel content is about 80 mol% or more, 85 mol% or more, 90 mol% or more, 91 mol% or more, or 94 mol% or more and 99 mol% or less, based on 100 mol% of metals excluding lithium in the lithium transition metal composite oxide. Because the high nickel-based positive electrode active material may achieve high capacity, the high nickel-based positive electrode active material may be applied to a high-capacity and high-density secondary battery.

### Positive electrode 10

The positive electrode 10 for the secondary battery 100 may include a current collector, and a positive electrode active material layer formed on the current collector. The positive electrode active material layer includes a positive electrode active material, and may further include a binder and/or a conductive material.

For example, the positive electrode may further include an additive that can be configured as a sacrificial positive electrode.

The content of the positive electrode active material may be in a range of about 90 wt% to about 99.5 wt% based on 100 wt% of the positive electrode active material layer, and the content of the binder and the conductive material may be in a range of about 0.5 wt% to 5 wt%, respectively, based on 100 wt% of the positive electrode active material layer.

The binder is configured to adhere the positive electrode active material particles to each other, and to adhere the positive electrode active material to a current collector. Representative examples of binders may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, but is not limited thereto.

The conductive material is included to impart conductivity to the electrode, and any electronically conductive material may be included as long as the electronically conductive material does not cause adverse chemical changes in the battery. Examples of conductive materials may include carbon-based materials such as, e.g., at least one of natural graphite, artificial graphite, carbon black, acetylene black, ketjen black, carbon fibers, carbon nanofibers, and carbon nanotubes; metallic substances in the form of metal powder or metal fiber containing at least one of copper, nickel, aluminum, silver, and the like; conductive polymers such as polyphenylene derivatives; or a mixture thereof.

Al may be included as the current collector, but the present disclosure is not limited thereto.

### Negative electrode active material

The negative electrode active material includes at least one of a material capable of reversibly intercalating/deintercalating lithium ions, lithium metal, an alloy of lithium and a metal, a material capable of doing and dedoping lithium, or a transition metal oxide.

The material capable of reversibly intercalating/deintercalating lithium ions is or includes a carbon-based negative electrode active material and may include, for example, crystalline carbon, amorphous carbon, or a combination thereof. Examples of the crystalline carbon may include graphite such as amorphous, platy, flaky, spherical, or fibrous natural graphite or artificial graphite, and examples of the amorphous carbon may include soft carbon, hard carbon, mesophase pitch carbide, calcined coke, and so on.

The alloy of lithium and a metal may be or include an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be included as the material capable of doping and dedoping lithium. The Si-based negative electrode active material may be or include at least one of silicon, a silicon-carbon composite, SiOₓ (0<x<2), an Si-Q alloy (where Q is or includes at least one of an alkali metal, an alkaline earth metal, a group 13 element, a group 14 element (excluding Si), a group 15 element, a group 16 element, a transition metal, a rare earth element, and a combination thereof) or a combination thereof. The Sn-based negative electrode active material may be or include at least one of Sn, SnO₂, an Sn-based alloy, or a combination thereof.

The silicon-carbon composite may be or include a composite of silicon and amorphous carbon. According to an example embodiment, the silicon-carbon composite may be in the form of silicon particles which surface is coated with amorphous carbon. For example, the silicon-carbon composite may include a secondary particle (core) in which silicon primary particles are assembled, and an amorphous carbon coating layer (shell) located on the surface of the secondary particle. The amorphous carbon may also be located between the silicon primary particles, and the silicon primary particles may be, for example, coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be included in combination with a carbon-based negative electrode active material.

### Negative electrode 20

The negative electrode 20 for the secondary battery 100 may include a current collector and a negative electrode active material layer formed on the current collector. The negative electrode active material layer includes a negative electrode active material and may further include a binder and/or a conductive material.

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder is configured to adhere the negative electrode active material particles to each other, and to adhere the negative electrode active material to a current collector. The binder may be or include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, the aqueous binder may further include a cellulose-based compound capable of imparting viscosity. As the cellulose-based compound, a mixture of one or more types of carboxymethyl cellulose, hydroxypropylmethyl cellulose, methyl cellulose, or alkali metal salts thereof may be included. As the alkali metal, at least one of Na, K, or Li may be included.

The dry binder is or includes a polymer material capable of being fiberized, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to impart conductivity to the electrode, and any electronically conductive material may be included as long as the electronically conductive material does not cause adverse chemical changes in the battery. Examples of the electronically conductive material may include carbon-based materials such as at least one of natural graphite, artificial graphite, carbon black, acetylene black, ketjen black, carbon fibers, carbon nanofibers, carbon nanotubes, and the like, metallic substances in the form of metal powder or metal fiber containing at least one of copper, nickel, aluminum, silver, and the like, conductive polymers such as polyphenylene derivatives, or a mixture thereof.

The negative electrode current collector may be or include at least one of copper foil, nickel foil, stainless steel foil, titanium foil, nickel foam, copper foam, a polymer substrate coated with a conductive metal, and combinations thereof.

### Electrolyte (not shown)

The electrolyte for the secondary battery 100 includes a non-aqueous organic solvent and a lithium salt.

The non-aqueous organic solvent is configured as a medium through which ions involved in the electrochemical reaction of the battery can move.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone, and the like. The alcohol-based solvent may include at least one of ethyl alcohol and isopropyl alcohol. The aprotic solvent may include at least one of nitriles such as R-CN (R is a C₂ to C₂₀ hydrocarbon group with a straight, branched, or ring structure, and may include a double bond, an aromatic ring, or an ether group), amides such as dimethylformamide, dioxolanes such as 1,3-dioxolane, 1,4-dioxolane, and the like, sulfolane, and the like.

The non-aqueous organic solvent may be included alone, or in combination of two or more types of solvent.

When the carbonate-based solvent is included, a cyclic carbonate and a chain carbonate may be mixed, and the cyclic carbonate and chain carbonate may be mixed in a volume ratio in a range of about 1: 1 to about 1:9.

The lithium salt is dissolved in an organic solvent, and may constitute a source of lithium ions in the battery, enabling the basic operation of a secondary battery, and may promote the movement of lithium ions between the positive and negative electrodes. Representative examples of lithium salts may include at least one or more of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

### Separator 30

A separator 30 may be present between the positive electrode 10 and the negative electrode 20, depending on the type of secondary battery 100. As the separator 30, at least one of polyethylene, polypropylene, polyvinylidene fluoride, or a multilayer film with two or more layers thereof may be included, and mixed multilayer films such as a polyethylene/polypropylene 2-layer separator, a polyethylene/polypropylene/polyethylene 3-layer separator, a polypropylene/polyethylene/polypropylene 3-layer separator, and the like, may be included.

The separator 30 may include a porous substrate, and a coating layer including an organic material, an inorganic material, or a combination thereof located on one side, or on both sides, of the porous substrate.

The porous substrate may be or include a polymer film formed of or including one polymer such as at least one of polyolefins such as polyethylene, polypropylene, and the like, polyesters such as polyethylene terephthalate, polybutylene terephthalate, and the like, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer, or a (meth)acrylic polymer.

The inorganic material may include inorganic particles such as at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof, but is not limited thereto.

The organic material and the inorganic material may be present as a mixture in one coating layer, or in a form in which a coating layer including an organic material and a coating layer including an inorganic material are stacked together.

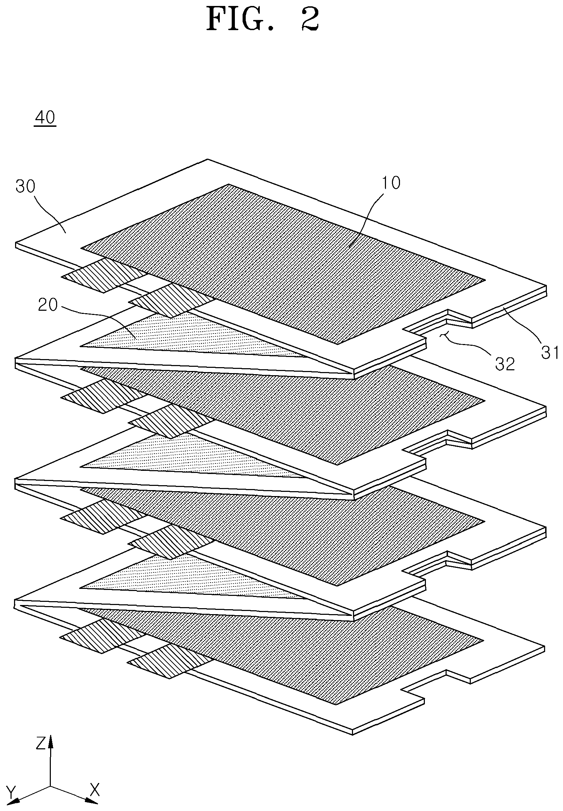

FIG. 2 is a view of an electrode assembly according to an example embodiment of the present disclosure.

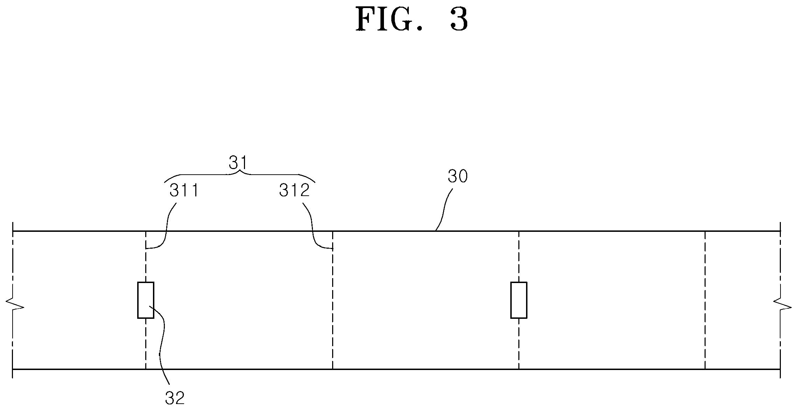

FIG. 3 is a view of a separator according to an example embodiment of the present disclosure.

In FIG. 2, the x-axis represents a width direction of the electrode assembly 40. In FIG. 2, the y-axis represents a length direction of the electrode assembly 40. In FIG. 2, the z-axis represents a height direction of the electrode assembly 40.

The secondary battery 100 according to an example embodiment of the present disclosure (including, for example, the secondary battery described in FIG. 1) includes an electrode assembly 40, and a case 50 in which the electrode assembly 40 is accommodated.

The electrode assembly 40 according to an example embodiment of the present disclosure includes electrodes 10 and 20 including a first electrode 10 and a second electrode 20, and a separator 30 provided between the first electrode 10 and the second electrode 20. The electrodes 10 and 20 and the separator 30 are stacked in one direction, and the separator 30 includes one or more holes 32 formed in the stacking direction of the separator 30.

The electrode assembly 40 includes the electrodes 10 and 20 and the separator 30.

The electrodes 10 and 20 include the first electrode 10 and the second electrode 20.

The first electrode 10 includes, for example, a positive electrode (for example, the positive electrode 10 described in FIG. 1), and the second electrode 20 includes, for example, a negative electrode (for example, the negative electrode 20 described in FIGS. 1 and 2). However, the first electrode 10 and the second electrode 20 are not limited thereto, and the first electrode 10 may include, for example, a negative electrode, and the second electrode 20 may include, for example, a positive electrode. Hereinafter, for convenience of illustration, the case where the first electrode 10 includes a positive electrode and the second electrode 20 includes a negative electrode is described as an example.

The separator 30 may be provided between the first electrode 10 and the second electrode 20. For example, the separator 30 may reduce or prevent a short circuit from occurring between the first electrode 10 and the second electrode 20. **In** addition, the separator 30 may support an electrolyte accommodated in the case 50 along with the electrode assembly 40. The separator 30 may be configured to substantially freely move lithium ions.

For example, the separator 30 may be folded in a substantially Z shape along a plurality of folding portions 31 spaced apart from each other.

For example, as shown in FIG. 3, the folding portion 31 includes a first folding portion 311 and a second folding portion 312, which are adjacent to each other. For example, the separator 30 may be folded in a first direction at the first folding portion 311. For example, the first direction may be clockwise or counterclockwise around the first folding portion 311. For example, the separator 30 may be folded in a second direction at the second folding portion 312. For example, the second direction may be clockwise or counterclockwise around the second folding portion 312. As such, the second direction may be different from the first direction. Accordingly, the folding portion 31 may be folded in a zigzag form, as illustrated in FIG. 2.

The electrodes 10 and 20 illustrated in FIG. 2 are inserted between the areas which are folded by the folding portion 31. For example, as shown in FIG. 2, the separator 30 is folded while wrapping at least one side of the electrodes 10 and 20. Thus, one side of the electrodes 10 and 20 may face the inner side of the folding portion 31.

The first electrode 10 and the second electrode 20 are alternately located in the folded separator 30.

The first electrode 10 and the second electrode 20 are alternately stacked with the folded separator 30 therebetween. For example, the separator 30 may be folded along the first folding portion 311 while wrapping one side of the first electrode 10. **In** addition, the separator 30 may be folded along the second folding portion 312 while wrapping one side of the second electrode 20. As folding is repeated in this way, the separator 30 may be folded in a zigzag form. **In** addition, the electrode assembly 40 may include one or more unit structures in which the first electrode 10, the separator 30, the second electrode 20, and the separator 30 are stacked, e.g., sequentially stacked.

Through this structure, the electrode assembly 40 may include at least one separator 30. For example, since the electrode 10 or 20 is located in one folded separator 30, the electrode assembly 40 may reduce or prevent the electrode 10 or 20 and the separator 30 from being misaligned.

Meanwhile, as described in FIG. 1, the secondary battery 100 according to an example embodiment of the present disclosure includes the electrode assembly 40, the case 50 accommodating the electrode assembly 40, and an electrolyte that is accommodated and sealed together with the electrode assembly 40 in the case 50.

The electrolyte may have high capacity and/or high viscosity to improve the performance and/or safety of the secondary battery 100. In this case, the impregnation of the electrolyte into the electrodes 10 and 20 may be reduced. In particular, as the electrode assembly 40 forms a stack, the electrolyte may not be sufficiently impregnated into the electrode assembly 40, or the electrode assembly 40 may not be uniformly impregnated with the electrolyte. When the impregnation of the electrolyte decreases in this way, the capacity of the secondary battery 100 may decrease, and the lifetime of the secondary battery 100 may be shortened.

In order to address this issue, the separator 30 according to an example embodiment of the present disclosure includes a hole 32.

The hole 32 is configured to provide a path through which the electrolyte can move. For example, the hole 32 may provide a path for the electrolyte to penetrate into the electrode assembly 40. The hole 32 may improve the impregnation of the electrolyte into the electrode assembly 40.

The hole 32 may be formed in the stacking direction of the separator 30 to provide a more efficient path for the movement of the electrolyte. As described above, the electrode assembly 40 is formed by stacking in one direction. For example, the electrode assembly 40 is formed by stacking the electrodes 10 and 20 and the separator 30 in one direction. In this case, the stacking direction in which the electrodes 10 and 20 and the separator 30 are stacked may be, for example, the same direction as the height direction (z-axis) of the electrode assembly 40.

The hole 32 may be parallel, or substantially parallel, to the path for the movement of the electrolyte. For convenience of illustration, the surface, which is perpendicular, or substantially perpendicular, to the height direction (z-axis) and is the uppermost surface in the stacking direction (for example, the height direction (z-axis)), is referred to as the upper surface of the electrode assembly 40. In addition, for example, the surface, which is perpendicular, or substantially perpendicular, to the height direction (z-axis) and is the lowermost surface in the stacking direction (for example, the height direction (z-axis)), is referred to as the lower surface of the electrode assembly 40. The electrolyte may be poured onto the electrode assembly 40 and move from the upper surface of the electrode assembly 40 to the lower surface of the electrode assembly 40. The electrolyte may substantially move from the upper surface of the electrode assembly 40 to the lower surface of the electrode assembly 40 along the stacking direction (for example, the height direction (z-axis)) of the electrode assembly 40.

The hole 32 may be formed in the stacking direction (for example, the height direction (z-axis)) of the separator 30. For example, the hole 32 may be formed by passing through a plane perpendicular, or substantially perpendicular, to the stacking direction (for example, the height direction (z-axis)) of the separator 30. For example, when the hole 32 is formed in the upper surface of the separator 30, the hole 32 may be exposed when viewed from the top surface of the electrode assembly 40.

Thus, the hole 32 may provide the path for the electrolyte to more efficiently penetrate into the electrode assembly 40.

For example, the hole 32 may be formed in the separator 30, except for the area facing the electrodes 10 and 20. When the hole 32 is formed in the area where the electrodes 10 and 20 are located, the hole 32 may cause a short circuit in the electrodes 10 and 20, or a salt may precipitate from the electrodes 10 and 20. In order to reduce or prevent these disadvantages and improve the penetration of the electrolyte, the hole 32 according to an example embodiment of the present disclosure may be formed only in the area where the electrodes 10 and 20 are not located, not in the entire area of the separator 30.

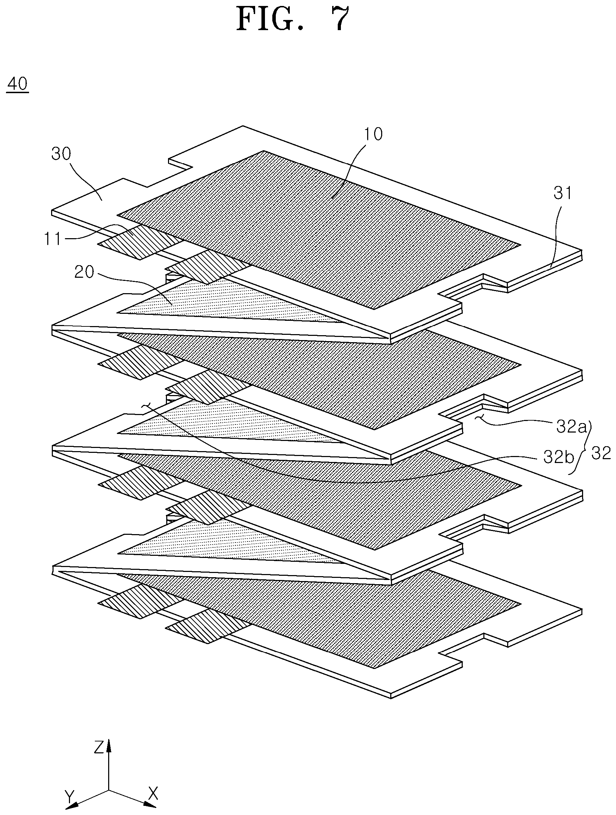

For example, the hole 32 may be formed adjacent to the folding portion 31 in the separator 30. Alternatively, for example, the hole 32 may be formed in the folding portion 31 by passing through it in the separator 30. Alternatively, for example, the hole 32 may be formed on the side of the separator 30 where tabs (for example, tab 11, see FIG. 7) does not extend. Thus, the hole 32 may provide an efficient path, or the most efficient path, for the movement of the electrolyte in the electrode assembly 40 that forms the stack. In addition, the hole 32 may reduce or prevent a short circuit from occurring in the electrode assembly 40.

The hole 32 may have a length of about 1% or more of the width of the separator 30. The width of the separator 30 refers to the distance across the separator 30 in the length direction (y-axis) of the electrode assembly 40. The length of the hole 32 refers to the distance across the hole 32 in the length direction (y-axis) of the electrode assembly 40. For example, the hole 32 may have a length of about 3% or more of the width of the separator 30, about 5% or more of the width of the separator 30, about 10% or more of the width of the separator 30, or about 20% or more of the width of the separator 30. When the hole 32 has a length of less than about 1% of the width of the separator 30, the hole 32 may not properly provide a path for the movement of the electrolyte. Therefore, it may be advantageous to form the hole 32 with a length of about 1% or more of the width of the separator 30.

The hole 32 may have a length of about 50% or less of the width of the separator 30. For example, the hole 32 may have a length of about 45% or less of the width of the separator 30, 40% or less of the width of the separator 30, about 35% or less of the width of the separator 30, about 30% or less of the width of the separator 30, or about 25% or less of the width of the separator 30. When the hole 32 is has a length of more than about 50% of the width of the separator 30, the hole 32 may cause a short circuit. This is because even when the hole 32 is formed in an area where there are no electrodes 10 and 20, the electrodes 10 and 20 may come into contact with the hole 32 as the electrodes 10 and 20 move, or the separator 30 contracts. When the hole 32 has a length of more than about 50% of the width of the separator 30, the durability of the separator 30 may be reduced. Therefore, it may be advantageous to form the hole 32 with a length of about 50% or less of the width of the separator 30.

Through this structure, the electrode assembly 40 and/or the secondary battery 100 including the electrode assembly 40 according to an example embodiment of the present disclosure may improve the impregnation of the electrolyte and the lifetime and/or the capacity of the secondary battery 100.

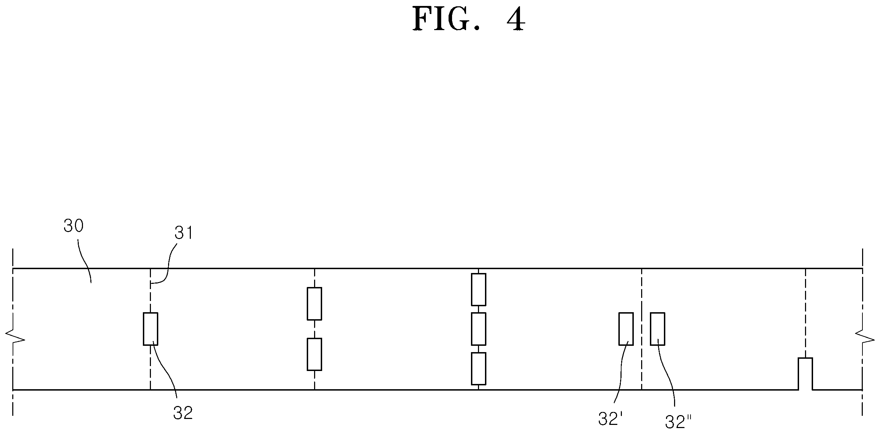

FIG. 4 is a view of a separator according to an example embodiment of the present disclosure.

As described in FIGS. 2 and 3, the electrode assembly 40 according to an example embodiment of the present disclosure includes a separator 30 in which one or more holes 32 are formed. The separator 30 illustrated in FIG. 4 is merely an example for illustrating various examples of the hole 32, and the separator 30 according to an example embodiment of the present disclosure is not limited to the content of FIG. 4.

For example, the hole 32 may be formed in the folding portion 31. For example, one or more holes 32 may be formed in the folding portion 31.

For example, the separator 30 may include one hole 32 formed in one folding portion 31 and passing through the separator 30. Alternatively, for example, the separator 30 may include one hole 32 formed in one folding portion 31 and passing through an end portion of the separator 30. In this case, for example, a part of the hole 32 may pass through the separator 30, and the other part of the hole 32 may remain open.

For example, the separator 30 may include a plurality of holes 32 formed in one folding portion 31 and passing through the separator 30. The plurality of holes 32 are spaced apart from each other. For example, a plurality of holes 32 may be spaced apart from each other at equal intervals. The number of holes 32 is not limited as long as the number of holes is equal to two or more. For example, the number of holes 32 may be in the range of 2 to 10. When the number of holes 32 exceeds 10, the distance between holes 32 may become too narrow, and thus the durability of the separator 30 may decrease. In addition, when the number of holes 32 exceeds 10, the size of each hole 32 may become too small, and thus the hole 32 may not sufficiently provide the path for the movement of the electrolyte. Thus, it may be advantageous that the number of holes 32 is less than 10. For example, the separator 30 may include two holes 32 formed in one folding portion 31 and passing through the separator 30. For example, the separator 30 may include three holes 32 formed in one folding portion 31 and passing through the separator 30.

Alternatively, for example, the hole 32 may be adjacent to the folding portion 31.

For example, the separator 30 may include one or more holes 32 adjacent to one folding portion 31 and passing through the separator 30. For convenience of illustration, in FIG. 4, the holes 32 that are adjacent to the folding portion 31 are indicated as a hole 32' and a hole 32".

The holes 32' and 32" may be adj acent to the folding portion 31 without passing through the folding portion 31.

The holes 32' and 32" may be formed on only one side of the folding portion 31. For example, the separator 30 may include only one of the holes 32' and 32".

Alternatively, the holes 32' and 32" may be formed on both sides of the folding portion 31. For example, the separator 30 may include both the holes 32' and 32". In this case, the holes 32' and 32" may be spaced apart from the folding portion 31 at equal intervals. Alternatively, the holes 32' and 32" may be located symmetrically with respect to the folding portion 31. However, the holes 32' and 32" may be randomly positioned with respect to the folding portion 31.

For example, the holes 32' and 32" may be located at different positions with respect to the folding portion 31. For example, the holes 32' and 32" may be located at different distances from the folding portion 31. Alternatively, different numbers of holes 32' and 32" may be formed on both sides of the folding portion 31. For example, the separator 30 may include two holes 32' formed on one side of the folding portion 31 and three holes 32" formed on the other side of the folding portion 31.

In addition, the separator 30 may include holes 32 that combine the above-described examples. For example, the separator 30 may include one hole 32 passing through one folding portion 31 and two holes 32' and 32" that are adjacent to the folding portion 31 and symmetrical with respect to the folding portion 31.

In addition, the separator 30 may include holes 32 that are repeatedly formed. For example, the separator 30 described in FIG. 3 is an example in which one hole 32 in the folding portion 31 is repeatedly formed.

As such, the separator 30 according to an example embodiment of the present disclosure may include holes 32 in various arrangements and/or shapes depending on the thickness and/or the density of the electrode assembly 40, so that the electrode assembly 40 according to an example embodiment of the present disclosure has an impregnation time that is adequate for the specifications of each electrode assembly 40.

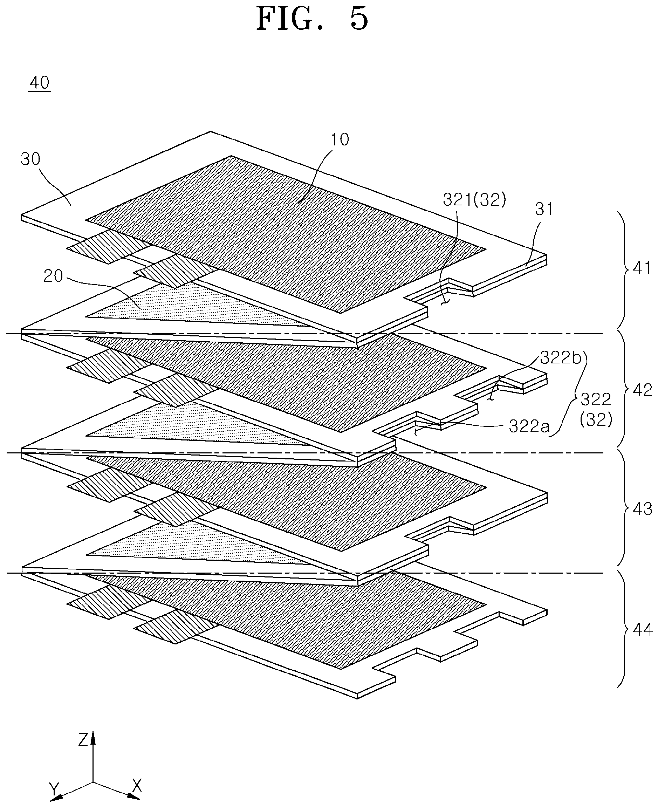

Through FIGS. 2 to 4, it has been explained that the separator 30 includes one or more holes 32. Through FIGS. 5 to 7 below, when the holes 32 are repeatedly formed, the arrangement of the repeatedly formed holes 32 is described in more detail.

FIG. 5 is a view of an electrode assembly according to an example embodiment of the present disclosure.

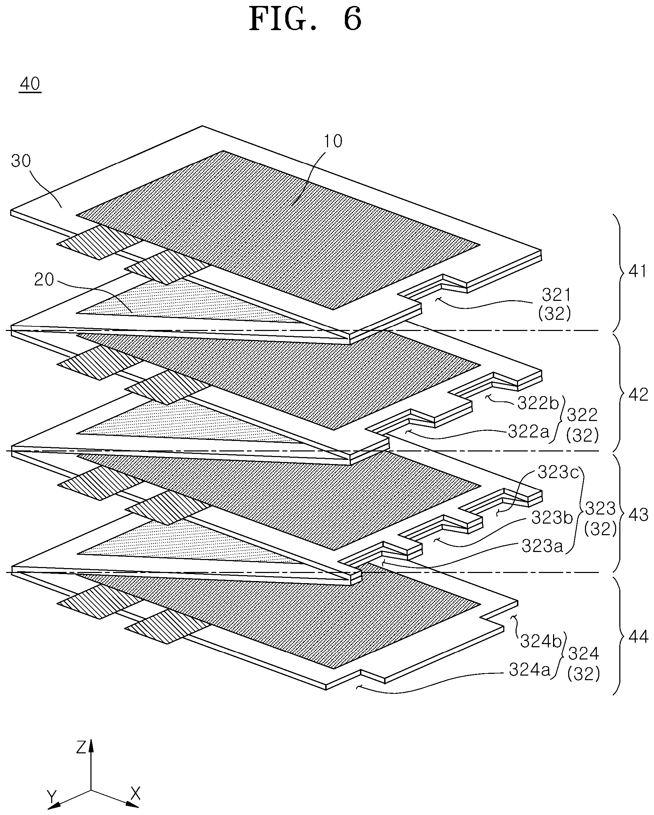

FIG. 6 is a view of an electrode assembly according to an example embodiment of the present disclosure.

In FIGS. 5 and 6, the x-axis represents a width direction of the electrode assembly 40. In FIGS. 5 and 6, the y-axis represents a length direction of the electrode assembly 40. In FIGS. 5 and 6, the z-axis represents a height direction of the electrode assembly 40. The height direction (z-axis) of the electrode assembly 40 includes the stacking direction in which the electrodes 10 and 20 and the separator 30 are stacked.

As described in FIGS. 2 to 4, the electrode assembly 40 according to an example embodiment of the present disclosure includes a separator 30 in which one or more holes 32 are formed.

In FIGS. 5 and 6, in order to explain the repeatedly formed holes 32, the electrode assembly 40 is divided into unit structures (for example, unit structures 41, 42, 43, and 44), which are arbitrary units.

The electrode assembly 40 includes a plurality of unit structures (for example, unit structures 41, 42, 43, and 44) stacked in the stacking direction, and the unit structures (for example, unit structures 41, 42, 43, and 44) include the separator 30 including two folding portions 31, one first electrode 10 with one side facing the folding portion 31, and one second electrode 20 with the other side facing the folding portion 31.

These unit structures (for example, unit structures 41, 42, 43, and 44) are virtual structures obtained by arbitrarily dividing the electrode assembly 40, and the electrode assembly 40 is not actually formed by combining a plurality of unit structures (for example, unit structures 41, 42, 43, and 44) that are separable from each other. As described above, the electrode assembly 40 may include at least one separator 30, and the separator 30 may be formed by connecting a plurality of unit structures (for example, unit structures 41, 42, 43, and 44).

For example, the hole 32 is formed in at least one of the plurality of unit structures (for example, unit structures 41, 42, 43, and 44) along the stacking direction. In other words, one or more holes 32 may be formed in each of the unit structures (for example, unit structures 41, 42, 43, and 44) included in the electrode assembly 40, or may be formed in some of the unit structures (for example, unit structures 41, 42, 43, and 44) included in the electrode assembly 40. FIGS. 3, 5, and 6 illustrate examples in which all unit structures (for example, unit structures 41, 42, 43, and 44) include one or more holes 32.

For example, the same number of holes 32 are formed in each of the unit structures (for example, unit structures 41, 42, 43, and 44). For example, FIG. 3 illustrates an example in which each unit structure (for example, unit structures 41, 42, 43, and 44) includes the same number of holes 32. For example, each unit structure (for example, unit structures 41, 42, 43, and 44) may have one hole 32.

Alternatively, for example, different numbers of holes 32 are formed in at least some of the unit structures (for example, unit structures 41, 42, 43, and 44).

For example, FIG. 5 illustrates an example in which one unit structure (for example, unit structure 41) includes one hole 321 and another unit structure (for example, unit structure 42) includes two holes 322. The one unit structure (for example, unit structure 41) and the another unit structure (for example, unit structure 42) may be alternately located.

For example, in FIG. 6, one unit structure (for example, unit structure 41) may include one hole 321 passing through the separator 30, another unit structure (for example, unit structure 42) may include two holes 322 passing through the separator 30, still another unit structure (for example, unit structure 43) may include three holes 323 passing through the separator 30, and yet another unit structure (for example, unit structure 44) may include two holes 324 formed at the corners. The four unit structures (for example, unit structures 41, 42, 43, and 44) may be formed as one set, and these four unit structures (for example, unit structures 41, 42, 43, and 44) may be repeatedly positioned.

In this way, the electrode assembly 40 may be configured such that two or more unit structures (for example, unit structures 41, 42, 43, and 44), at least some of which include different numbers of holes 32, are alternately arranged. However, the electrode assembly 40 may also be configured such that two or more unit structures (for example, unit structures 41, 42, 43, and 44), at least some of which include different numbers of holes 32, are randomly arranged. Thus, the electrode assembly 40 may effectively reduce or prevent a short circuit and provide a wider path for the movement of the electrolyte.

For example, at least a portion of the holes 32 formed in the unit structures (for example, unit structures 41, 42, 43, and 44) may overlap each other in the stacking direction. For example, the holes 32 formed in the unit structures (for example, unit structures 41, 42, 43, and 44) may be offset in the stacking direction.

For example, the electrode assembly 40 described in FIG. 3 is an example in which all of the holes 32 formed in the unit structures (for example, unit structures 41, 42, 43, and 44) overlap each other in the stacking direction.

For example, the electrode assemblies 40 described in FIGS. 5 and 6 are examples in which the holes 32 formed in the unit structures (for example, unit structures 41, 42, 43, and 44) partially overlap in the stacking direction.

For example, when viewed from the top of the electrode assembly 40 in FIG. 5, part of the hole 322a and part of the hole 322b may be visible through the hole 321.

For example, when viewed from the top surface of the electrode assembly 40 in FIG. 6, part of the hole 322a and part of the hole 322b may be visible through the hole 321. In addition, in the stacking direction, the hole 322a may overlap with part of the hole 323a and/or part of the hole 323b. Additionally, in the stacking direction, the hole 322b may overlap with part of the hole 323b and/or part of the hole 323c. Likewise, in the stacking direction, the hole 323a may overlap with part of the hole 324a. Furthermore, in the stacking direction, the hole 323c may overlap with part of the hole 324b.

As the holes 32 may overlap each other in the stacking direction, the electrode assembly 40 provides a path through which the electrolyte may move more efficiently.

However, an example embodiment of the present disclosure is not limited thereto. For example, the holes 32 formed in the unit structures (for example, unit structures 41, 42, 43, and 44) may be offset, without overlapping each other, in the stacking direction. In this case, the unit structures (for example, unit structures 41, 42, 43, and 44) may more efficiently reduce or prevent short circuits between the electrodes 10 and 20 included in each of the unit structures.

Meanwhile, the holes 32 formed in the unit structures (for example, unit structures 41, 42, 43, and 44) may have the same size, but may also have different sizes.

For example, FIG. 5 illustrates an example in which the unit structures (for example, unit structures 41 and 42) have different numbers of holes 321 and 322 with the same size. However, the same number of holes 32 with different sizes may be formed in the unit structures (for example, unit structures 41 and 42). For example, the size of the holes 32 may gradually become smaller from the upper surface to the lower surface along the stacking direction. Thus, the holes 32 may allow the electrolyte to move readily along the stacking direction while more efficiently reducing or preventing a short circuit on the lower surface where the amount of electrolyte movement is small.

FIG. 7 is a view of an electrode assembly according to an example embodiment of the present disclosure.

In FIG. 7, the x-axis represents a width direction of the electrode assembly 40. In FIG. 7, the y-axis represents a length direction of the electrode assembly 40. In FIG. 7, the z-axis represents a height direction of the electrode assembly 40. The height direction (z-axis) of the electrode assembly 40 includes the stacking direction in which the electrodes 10 and 20 and the separator 30 are stacked.

As described in FIGS. 2 to 6, the electrode assembly 40 according to an example embodiment of the present disclosure includes a separator 30 in which one or more holes 32 are formed.

The secondary battery 100 (for example, including the secondary batteries described in FIGS. 1 to 6) according to an example embodiment of the present disclosure may include tabs (for example, tab 11) electrically connected to the electrodes 10 and 20 and extending to the outside of the separator 30.

The electrodes 10 and 20 include a substrate and a coating layer applied on at least a portion of at least one side of the substrate.

The substrate includes, for example, the current collector described in FIG. 1. The substrate may collect the active material included in the coating layer. **In** addition, the substrate may maintain the shape of the electrodes 10 and 20.

When the electrode 10 or 20 is a positive electrode, the substrate is a positive electrode current collector. **In** this case, the substrate may include, for example, at least one of stainless steel, aluminum, nickel, titanium, calcined carbon, or aluminum or stainless steel which surface is treated with at least one of carbon, nickel, titanium, silver, and the like.

When the electrode 10 or 20 is a negative electrode, the substrate is a negative electrode current collector. **In** this case, the substrate may include, for example, at least one of copper, stainless steel, aluminum, nickel, titanium, calcined carbon, copper or stainless steel which surface is treated with at least one of carbon, nickel, titanium, silver, and the like, and an aluminum-cadmium alloy.

The coating layer includes, for example, an active material layer. The coating layer includes, for example, an active material.

When the electrode 10 or 20 is a positive electrode, the active material included in the coating layer may include, for example, lithium (Li). The coating layer may further include, for example, a conductive material and/or a binder.

When the electrode 10 or 20 is a negative electrode, the active material included in the coating layer may include, for example, at least one of silicon (Si), carbon (C), carbon nanotubes (CNTs), and a combination thereof. The coating layer may further include, for example, a conductive material and/or a binder.

The coating layer may be provided on one side of the substrate. Alternatively, the coating layer may be provided on both sides of the first substrate. In addition, the coating layer may be provided on a portion of the substrate.

The coating layer is formed, for example, by applying a slurry including an active material onto the substrate. Alternatively, the coating layer may be formed, for example, by attaching a free-standing film including an active material to the substrate.

In the electrodes 10 and 20, the area where the coating layer is provided on the substrate may be referred to as a coated portion. In the electrodes 10 and 20, the area where the coating layer is not provided on the substrate and the substrate is exposed to the outside may be referred to as an uncoated portion.

The tab (for example, tab 11) is configured as a passage through which the electrodes 10 and 20 may be electrically connected to the outside. In FIG. 7, only the first tab 11 connected to the first electrode 10 is shown, and the second tab connected to the second electrode 20 is omitted. The description of the second tab connected to the second electrode 20 is the same or similar to the description of the first tab 11 connected to the first electrode 10.

The tab (for example, tab 11) is formed by attaching a structure including a conductive material to the uncoated portion. In this case, one side of the tab 11 may be joined to the uncoated portion, and the other side may extend to the outside of the uncoated portion. Alternatively, for example, the uncoated portion may be extended to form the tab (for example, tab 11). In this case, the tab (for example, tab 11) may be integrally formed with the first electrode plate 211.

The tab (for example, tab 11) may be connected to the electrode tabs 71 and/or 72 described in FIG. 1 to electrically connect the electrode assembly 40 to the outside of the battery 100. For example, the tab 11 is connected to the electrode tabs 71 and/or 72, which are exposed to the outside of the case 50, through welding. Alternatively, the tab 11 is connected to the electrode tabs 71 and/or 72, which are exposed to the outside of the case 50, through adhesion.

Although FIG. 7 shows an example in which the first tab 11 and the second tab extend from both sides of the electrode assembly 40, the shape of the secondary battery 100 according to an example embodiment of the present disclosure is not limited thereto. For example, the secondary battery 100 may include the first tab and the second tab that extend in the same direction, that is, from one side of the electrode assembly 40.

The hole 32 may be formed on a side which is different from the side on which the tab (for example, tab 11) extends. As described above, the tab (for example, tab 11) electrically connects the electrode assembly 40 to the outside. When the hole 32 is adjacent to the tab (for example, tab 11), a short circuit may occur in the electrode assembly 40 through the tab (for example, tab 11). To reduce or prevent the occurrence of a short circuit, it may be advantageous that the hole 32 is formed on the side where the tab (for example, tab 11) does not extend.

Accordingly, the hole 32 may be formed on one side, or on both sides, of the electrode assembly 40. In this case, the one side, or both sides, of the electrode assembly 40 correspond to the side on which the tab (for example, tab 11) does not extend. For example, as shown in FIG. 7, the separator 30 may include holes 32a and 32b formed on both sides of the electrode assembly 40. Thus, the electrode assembly 40 may further improve the impregnation of the electrolyte.

## Claims

1. An electrode assembly (40) comprising:
a first electrode (10) and a second electrode (20); and
a separator (30) between the first electrode (10) and the second electrode (20),
wherein the electrodes (10, 20) and the separator (30) are stacked in one direction, and the separator (30) includes one or more holes (32) formed in the stacking direction of the separator (30).

2. The electrode assembly (40) of claim 1, wherein:
the separator (30) is folded in a substantially Z shape along a plurality of folding portions (31) spaced apart from each other, and
the first electrode (10) and the second electrode (20) are alternately located in the folded separator (30).

3. The electrode assembly (40) of claim 2, further comprising a plurality of unit structures (41, 42, 43, 44) stacked in the stacking direction,
wherein at least one of the unit structures (41, 42, 43, 44) includes a separator (30) including two folding portions (31), one first electrode (10) with one side facing the folding portion (31), and one second electrode (20) with the other side facing the folding portion (31).

4. The electrode assembly (40) of claim 3, wherein the one or more holes (32) are formed in at least one of the plurality of unit structures (41, 42, 43, 44) along the stacking direction.

5. The electrode assembly (40) of claim 4, wherein the one or more holes (32) are formed so that at least a portion of the one or more holes (32) overlap each other in the stacking direction.

6. The electrode assembly (40) of claim 4, wherein the one or more holes (32) are offset in the stacking direction.

7. The electrode assembly (40) of claim 3, wherein the same number of the one or more holes (32) are formed in each of the plurality of unit structures (41, 42, 43, 44).

8. The electrode assembly (40) of claim 3, wherein different numbers of the one or more holes (32) are formed in at least some of the plurality of unit structures (41, 42, 43, 44).

9. The electrode assembly (40) of claim 2, wherein the one or more holes (32) are formed in the folding portion (31).

10. The electrode assembly (40) of claim 2, wherein the one or more holes (32) are formed adjacent to the folding portion (31).

11. The electrode assembly (40) of claim 2, wherein the one or more holes (32) are formed on one of one side and both sides of the electrode assembly (40).

12. A secondary battery (100) comprising:
a case (50); and
an electrode assembly (40) as defined in any one of the preceding claims included in the case (50).

13. The secondary battery (100) of claim 12, further comprising a tab (11) electrically connected to the electrodes (10, 20) and extending to the outside of the separator (30),
wherein the hole (32) is formed on a side that is different from the side from which the tab (11) extends.
